# EUROPÄISCHE PATENTSCHRIFT

(11) **EP 0 711 203 B1**
(45) Veröffentlichungstag und Bekanntmachung des Hinweises auf die Patenterteilung: **01.04.1998**
(21) Anmeldenummer: 94921599.0
(22) Anmeldetag: 26.07.1994
(51) Int. Cl.: B01J 38/42, B01J 38/44, B01J 21/20

(54) **VERFAHREN UND EINRICHTUNG ZUR RÜCKGEWINNUNG VON BESTANDTEILEN EINES KATALYSATORS**
PROCESS AND INSTALLATION FOR RECOVERING CATALYST COMPONENTS
PROCEDE ET INSTALLATION DE RECUPERATION DES COMPOSANTS D'UN CATALYSEUR

(30) Priorität: 30.07.1993 DE 4325690
(43) Veröffentlichungstag der Anmeldung: 15.05.1996
(73) Patentinhaber: SIEMENS AKTIENGESELLSCHAFT, 80333 München (DE)
(72) Erfinder: HUMS, Erich, D-91093 He dorf (DE)
(86) Internationale Anmeldenummer: DE9400865
(87) Internationale Veröffentlichungsnummer: WO9503887

(56) Entgegenhaltungen:
- EP-A- 0 029 699
- EP-A- 0 317 875
- FR-A- 1 244 072
- US-A- 4 343 775
- US-A- 4 854 972

## Beschreibung

Die Erfindung bezieht sich auf ein Verfahren und eine Einrichtung zur Rückgewinnung von Bestandteilen eines Katalysators, der unter anderem Titandioxid TiO₂ und einen oder mehrere der Bestandteile Wolframoxid WO₃, Molybdänoxid MoO₃, Vanadinpentoxid V₂O₅ und gegebenenfalls betriebsbedingte Verunreinigungen, wie z. B. Arsen, Eisen, Cadmium und andere Schwermetalle sowie deren Verbindungen, enthält. Das Verfahren und die Einrichtung eignen sich insbesondere zur Rückgewinnung von Bestandteilen von verbrauchten, desaktivierten DeNOₓ-Katalysatoren.

Bei der katalytischen Umsetzung von Stickoxiden, halogenierten Kohlenwasserstoffen und anderen organischen Verbindungen haben sich Katalysatoren bewährt, die Titandioxid und einen oder mehrere der Bestandteile Wolframoxid, Molybdänoxid und Vanadinpentoxid enthalten. Es ist eine Eigenart dieser Katalysatoren, daß die katalytische Aktivität mit zunehmender Betriebsdauer nachläßt. Dies kann beispielsweise durch die Ablagerung von Flugstäuben und der obengenannten Metalle sowie deren Verbindungen auf der katalytisch aktiven Katalysatoroberfläche bedingt sein. Verbrauchte Katalysatoren müssen daher unter besonderen Gesichtspunkten verwertet werden.

Zur Verwertung oder Beseitigung von verbrauchten Katalysatoren ist eine Reihe von derzeit unbefriedigenden Verfahren bekannt. Beispiele hierfür sind die direkte Lagerung verbrauchter Katalysatoren auf Sondermülldeponien, das Vermahlen und auslaugsichere Einschmelzen verbrauchter Katalysatoren in der Schlacke einer Schmelzkammerfeuerung (vergleiche DE-OS-38 41 219) sowie die Aufarbeitung von verbrauchten Katalysatoren auf naßchemischem Weg. Bei dem letztgenannten Verfahren liegen die einzelnen Komponenten des Katalysators zwar quantitativ vor, sie können jedoch bei der Ausfällung nicht hinreichend sauber voneinander getrennt werden (vergleiche DE-OS 39 03 590).

Aus der US-A-4,854,972 ist ein Verfahren zur Gewinnung eines TiO₂-Pigments bekannt. Hierbei wird TiO₂-haltiges Einsatzmaterial in einem Wirbelbettreaktor in Gegenwart eines kohlenstoffhaltigen Reduktionsmittels chloriert und anschließend zu Titandioxid verbrannt. Dazu wird die in der Chlorierung erhaltene Gasmischung von festen Komponenten und anschließend TiCl₄ in einer Reinigungsstufe von den anderen gasförmigen Verbindungen abgetrennt.

Der Erfindung liegt die Aufgabe zugrunde, ein Verfahren und eine Einrichtung zur Rückgewinnung von Bestandteilen eines Katalysators, insbesondere eines DeNOₓ-Katalysators, anzugeben, bei dem die Bestandteile des Katalysators, zumindest aber das Titandioxid TiO₂, mit hoher Reinheit zurückgewonnen werden. Diese Reinheit soll der Reinheit der ursprünglichen Ausgangsbestandteile qualitativ entsprechen, damit die zurückgewonnenen Bestandteile wieder als Rohstoffe einsetzbar sind.

Bezüglich des Verfahrens wird diese Aufgabe erfindungsgemäß dadurch gelöst, daß - der Reihe nach - das katalytische Material zu einem feinen Pulver aufgemahlen wird, das zum feinen Pulver aufgemahlene, katalytische Material auf ein Reduktionsmittel mit definiertem Korngrößenspektrum aufgebracht und dort verfestigt wird, das so modifizierte Reduktionsmittel und gegebenenfalls weiteres Reduktionsmittel unter reduzierenden Bedingungen in einer Wirbelschicht chloriert wird, Titantetrachlorid TiCl₄ von anderen Chlor- und/oder Chlor-Sauerstoff-Verbindungen, die in dem bei der Chlorierung entstandenen Gasgemisch enthalten sind, destillativ abgeschieden wird, und das so erhaltene Titantetrachlorid TiCl₄ mit Sauerstoff oder mit Sauerstoff und Wasserstoff verbrannt wird.

Bezüglich der Einrichtung wird diese Aufgabe erfindungsgemäß dadurch gelöst, daß der Reihe nach eine Mahlvorrichtung zum Erzeugen eines feinen Pulvers aus dem katalytischen Material des aufzuarbeitenden Katalysators, eine Einrichtung zur Aufbringung des fein gemahlenen, katalytischen Materials auf ein Reduktionsmittel mit definiertem Korngrößenspektrum, ein Chlorierungsreaktor mit einer Wirbelschicht für das mit dem katalytischen Material versehene Reduktionsmittel, eine Trenn- und Reinigungsstufe zur Abtrennung von Staub und zur fraktionierten Destillation des im Chlorierungsreaktor entstandenen Gasgemisches und eine Verbrennungsstufe für das aus dem Gasgemisch abgeschiedene Titantetrachlorid TiCl₄ vorgesehen sind.

Auf diese Weise ist es möglich, das katalytisch aktive Material des Katalysators nahezu quantitativ über den Chlorierungsprozeß in seine Bestandteile zu zerlegen und im besonderen das Titandioxid mit einer der Ausgangsspezifikation entsprechenden Qualität zurückzugewinnen. Die Aufbringung des gemahlenen katalytischen Materials auf ein Reduktionsmittel hat den Vorteil, daß nicht das katalytische Material selbst, sondern ein geeignetes Reduktionsmittel auf definierte Abmessungen aufgemahlen werden muß, was aufgrund der nur sehr geringen Härte des katalytischen Materials verfahrenstechnisch erheblich einfacher zu realisieren ist.

Bei dem erfindungsgemäßen Verfahren ist es vorteilhaft, wenn als Reduktionsmittel Aktivkohle und/oder ein aschearmer Koks verwendet wird, der einen mittleren Teilchendurchmesser von etwa 0,1 bis 0,5 mm, vorzugsweise 150 bis 200 µm, aufweist. Dieser feingemahlene Koks ist ein geeignetes Ausgangsmaterial für den Chlorierungsprozeß, weil auf diese Weise gewährleistet ist, daß es nur eine geringe Anzahl Teilchen gibt, die von der vorzugsweise gewählten mittleren Teilchengröße abweichen. Abweichungen der mittleren Korngröße wirken sich bei der Chlorierung insofern negativ aus, als sich feine Partikel verflüchtigen können, ohne reagiert zu haben, während grobe Partikel sedimentieren und den Chlorierungsreaktor verstopfen können.

Weitere vorteilhafte Ausgestaltungen der Erfindung sind den übrigen Unteransprüchen zu entnehmen.

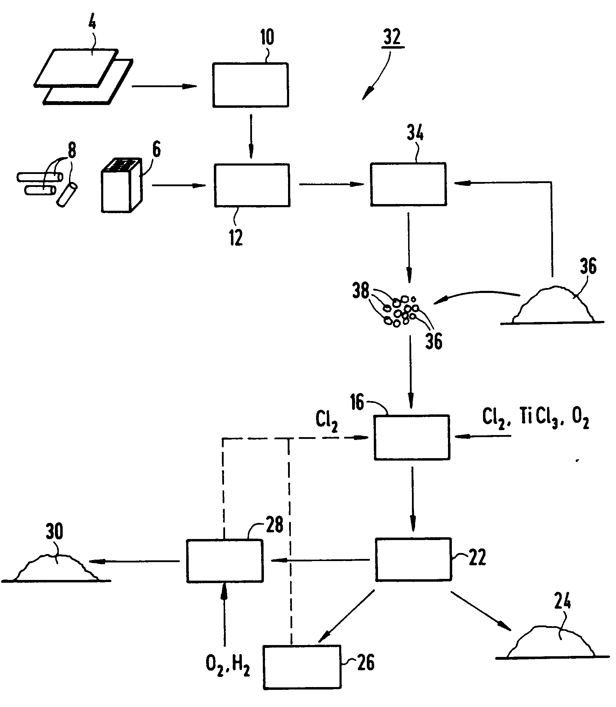

Ein Ausführungsbeispiel der Erfindung wird anhand der Zeichnung näher erläutert. Dabei zeigt die Zeichnung in schematischer Darstellung eine Einrichtung zur Rückgewinnung von Bestandteilen eines DeNOₓ-Katalysators.

Die Zeichnung zeigt in schematischer Darstellung eine Einrichtung 32, die nach einem erfindungsgemäßen Verfahren zur Rückgewinnung von Bestandteilen verbrauchter DeNOₓ-Katalysatoren arbeitet. Die verbrauchten DeNOₓ-Katalysatoren liegen hierbei in Form von Plattenkatalysatoren 4, Wabenkatalysatoren 6 und/oder Katalysatorpellets 8 vor. Im Fall von Plattenkatalysatoren 4 werden diese einer Abscheidevorrichtung 10 zugeführt, in der das katalytische Material von dem Trägermaterial abgetrennt wird. Das abgetrennte katalytische Material wird dann einer Mahlvorrichtung 12 zugeführt. Dieser Mahlvorrichtung 12 werden die Wabenkatalysatoren 6 und/oder die Katalysatorpellets 8 direkt zugeführt. In der Mahlvorrichtung wird das katalytische Material der Plattenkatalysatoren 4, der Wabenkatalysatoren 6 und der Katalysatorpellets 8 zu einem feinen Pulver vermahlen, das eine mittlere Korngröße kleiner 50 µm aufweist. Dieses aus der Mahlvorrichtung 12 kommende Pulver des katalytisch aktiven Materials wird zusammen mit einem geeigneten Reduktionsmittel auf Kohlenstoffbasis, im Ausführungsbeispiel Petrolkoks 36, in eine Einrichtung 34 gebracht. Aufgrund der größeren Härte von Koks gegenüber dem katalytischen Material läßt sich verhältnismäßig einfach aus Koks ein Pulver mit einem definierten Korngrößenspektrum herstellen. Petrolkoks 36 eignet sich besonders gut als Reduktionsmittel, weil dieser extrem aschearm ist und aufgrund seines geringen Gehalts an flüchtigen Bestandteilen, wie z. B. Schwefel und Wasserstoff, nicht zu einer Salzsäure-Bildung im Chlorierungsreaktor 16 beiträgt. In der Einrichtung 34 wird der mit einer mittleren Korngröße von etwa 200 µm vorliegende Petrolkoks 36 angefeuchtet. Ein sinnvoller Bereich für ein Korngrößenspektrum mit einem mittleren Teilchendurchmesser (einer mittleren Korngröße) liegt zwischen etwa 100 und 500 µm. Daran anschließend wird das aufgemahlene katalytische Material auf der feuchten Oberfläche des Petrolkokses 36 dispergiert und durch einen kurzen Calcinier-Vorgang verfestigt. Im Ausführungsbeispiel erfolgt das Dispergieren durch Mischen des angefeuchteten Petrolkokses 36 mit dem gemahlenen katalytischen Material. Hierbei wird das katalytische Material dann im Bezug zu dem mittleren Teilchendurchmesser, hier Petrolkoks 36, des Reduktionsmittels erheblich feiner aufgemahlen.

Der auf diese Weise modifizierte oder behandelte Petrolkoks 38 wird darauf hin bedarfsweise mit zusätzlichem, für den Chlorierungsprozeß erforderlichen Petrolkoks 36 verschnitten. Der Petrolkoks 36 sowie der modifizierte Petrolkoks 38 werden dann gemeinsam in einen Chlorierungsreaktor 16 eingeführt.

In dem Chlorierungsreaktor 16, der als Wirbelschicht-Reaktor ausgeführt ist, werden die enthaltenen festen Metalle und/oder festen Metalloxide unter reduzierender Chloratmosphäre und bei einer Temperatur von etwa 1000 °C in gasförmige Chlor- und/oder Chlor-Sauerstoff-Verbindungen umgewandelt. Dem Chlorierungsreaktor 16 kann dabei zusätzlich auch noch Titantetrachlorid TiCl₃ und Sauerstoff O₂ zugeführt werden. Bezüglich des Sauerstoffs muß darauf geachtet werden, daß die Zugabe unterstöchiometrisch erfolgt, d. h. es wird ausreichend Sauerstoff zur Bildung von Kohlenmonoxid CO, aber nicht zur Bildung von Kohlendioxid CO₂ zugegeben. Das im Chlorierungsreaktor 16 bei der Chlorierung entstehende Gasgemisch enthält daher unter anderem folgende Bestandteile: Titantrichlorid TiCl₃, Titantetrachlorid TiCl₄, Molybdänhexachlorid MoCl₆, Molybdänoxychlorid MoOCl₄, Arsentrichlorid AsCl₃, Arsenpentachlorid AsCl₅, Siliziumtetrachlorid SiCl₄, Wolframhexachlorid WCl₆, Wolframoxychlorid WOCl₄, Eisendichlorid FeCl₂ und Eisentrichlorid FeCl₃. Daneben können weitere Bestandteile auftreten.

Dieses Gasgemisch wird anschließend in eine Trenn- und Reinigungsstufe 22 eingeleitet. In der Trenn- und Reinigungsstufe 22 werden die im Gasgemisch enthaltenen Feinstäube 24 aus dem Gasgemisch abgefiltert und deponiert. Durch fraktionierte Destillation werden in der Trenn- und Reinigungsstufe 22 bei Absenkung der Temperatur des Gasgemisches bis auf etwa 136 °C sämtliche Chlor- und Chlor-Sauerstoff-Verbindungen der Elemente Arsen, Cadmium, Kalzium, Eisen, Magnesium, Molybdän, Vanadium und Wolfram von dem bis zu einer Temperatur von 136,4 °C noch gasförmigen Titantetrachlorid TiCl₄ getrennt. Lediglich das Arsentrichlorid (Siedepunkt 131 °C) und das Vanadiumoxychlorid VOCl₃ (Siedepunkt 126 °C) sind bei dieser Temperatur noch zusammen mit dem Titantetrachlorid TiCl₄ im Gasgemisch. Die bis zu dieser Temperatur aus dem Gasgemisch abgeschiedenen Chlor- und/oder Chlor-Sauerstoff-Verbindungen der genannten Metalle werden in an und für sich bekannter Weise in einer Weiterverarbeitungseinrichtung 26 in ihre Oxide umgewandelt. In der Trenn- und Reinigungsstufe 22 wird das Titantetrachlorid TiCl₄ destillativ von dem Arsentrichlorid AsCl3 und dem Vanadiumoxychlorid VOCl₃ abgetrennt, wobei die beiden letztgenannten Verbindungen ebenfalls der Weiterbearbeitungseinrichtung 26 zugeführt werden.

Das auf diese Weise gereinigte Titantetrachlorid TiCl₄ wird in einer Verbrennungsstufe 28 bei einer Temperatur von 900 bis 1400 °C mit Sauerstoff zu Titandioxid-Pigment 30 verbrannt. Alternativ kann das Titantetrachlorid TiCl₄ auch in einer Knallgasflamme verbrannt werden. Dabei wird das sowohl in der Verbrennungsstufe 28 als auch in der Weiterverarbeitungseinrichtung 26 frei werdende Chlor Cl₂ in den Chlorierungsreaktor 16 rezirkuliert. Dies ist durch gestrichelte Linien angedeutet.

Zusätzlich kann in den Chorierungsreaktor 16 zur Verstärkung der Reduktionswirkung auch Titantrichlorid TiCl₃ eingebracht werden. Hierdurch werden Metallchloride mit hohen Oxidationszahlen, wie z. B. VCl₅, WCl₆, VOCl₃, WOCl₄ in Metallchloride mit niedrigeren Oxidationszahlen, wie z. B. VCl₃, WCl₄, umgewandelt. Letztere sind aufgrund stärker abweichender Siedepunkte besser vom Titantetrachlorid zu trennen.

Das mit dem vorstehend erläuterten Verfahren gewonnene Titandioxidpigment 30 weist Spezifikationen auf, die den Ausgangsspezifikationen von handelsüblichem, nach dem Sulfat- oder Chloridprozeß hergestellten Titandioxidpigment entsprechen. Das Titandioxidpigment 30 kann daher auch zur Herstellung neuer DeNOₓ-Katalysatoren verwendet werden.

Die Rückgewinnung von Bestandteilen verbrauchter DeNOₓ-Katalysatoren 4, 6, 8 unter Durchführung eines Chlorierungsprozesses konnte nur deshalb zu einem qualitativ akzeptalen Endprodukt, nämlich unter anderem dem Titandioxidpigment 30, führen, weil es gelungen ist, die verbrauchten DeNOₓ-Katalysatoren 4, 6, 8, im besonderen das aufgemahlene katalytisch aktive Material selbst, zu Formkörpern 18, 38 mit definiertem Korngrößenspektrum zu fertigen und damit dem Chlorierungsreaktor 16 in geeigneter Weise zuführbar zu machen. Eine zu unterschiedliche Körnung hätte zur Folge, daß zu grobe Partikel den Chlorierungsreaktor 16, der als Wirbelschichtrektor ausgebildet ist, verstopfen und zu feine Partikel den Chlorierungsreaktor 16 verlassen, ohne zuvor mit dem Chlor Cl₂ reagiert zu haben.

## Patentansprüche

1. Verfahren zur Rückgewinnung von Bestandteilen eines Katalysators (4, 6, 8), der unter anderem Titandioxid TiO₂ und einen oder mehrere der Bestandteile Wolframoxid WO₃, Molybdänoxid MoO₃, Vanadinpentoxid V₂O₅ und gegebenenfalls betriebsbedingte Verunreinigungen, wie z. B. Arsen, Eisen, Kadmium und andere Schwermetalle sowie deren Verbindungen, enthält, bei dem der Reihe nach
a) das katalytische Material des Katalysators (4, 6, 8) zu einem feinen Pulver aufgemahlen wird,
b) das zum feinen Pulver aufgemahlene katalytische Material auf ein Reduktionsmittel (36) mit definiertem Korngrößenspektrum aufgebracht und dort verfestigt wird,
c) das so modifizierte Reduktionsmittel (38) und gegebenenfalls weiteres Reduktionsmittel (20, 36) unter reduzierenden Bedingungen in einer Wirbelschicht chloriert wird,
d) Titantetrachlorid TiCl₄ von anderen Chlor- und/oder Chlor-Sauerstoff-Verbindungen, die in dem bei der Chlorierung entstandenen Gasgemisch enthalten sind, destillativ abgeschieden wird, und
e) das so erhaltene Titantetrachlorid TiCl₄ mit Sauerstoff oder mit Sauerstoff und Wasserstoff verbrannt wird.

2. Verfahren nach Anspruch 1,
**dadurch gekennzeichnet**, daß das zum feinen Pulver aufgemahlene katalytische Material auf das zuvor angefeuchtete Reduktionsmittel (36) aufgebracht und zusammen mit dem Reduktionsmittel (36) calciniert wird.

3. Verfahren nach Anspruch 1 oder 2,
**dadurch gekennzeichnet**, daß als Reduktionsmittel (20, 36) Aktivkohle und/oder ein aschearmer Koks verwendet wird, der einen mittleren Teilchendurchmesser von etwa 0,1 bis 0,5 mm, vorzugsweise von 150 bis 200 µm, aufweist.

4. Verfahren nach einem der Ansprüche 1 bis 3,
**dadurch gekennzeichnet**, daß die Chlorierung im Wirbelschichtreaktor (16) bei einer Temperatur von etwa 1000 °C durchgeführt wird.

5. Verfahren nach einem der Ansprüche 1 bis 4,
**dadurch gekennzeichnet**, daß das bei der Verbrennung des Titantetrachlorids TiCl₄ mit Sauerstoff oder mit Sauerstoff und Wasserstoff freigesetzte Chlor Cl₂ zur Chlorierung eingesetzt wird.

6. Verfahren nach einem der Ansprüche 1 bis 5,
**dadurch gekennzeichnet**, daß beim Reduzieren Titantrichlorid TiCl₃ zugesetzt wird.

7. Einrichtung (32) zur Durchführung des Verfahrens nach Anspruch 3,
**dadurch gekennzeichnet**, daß der Reihe nach
a) eine Mahlvorrichtung (12) zum Erzeugen eines feinen Pulvers aus dem katalytischen Material des aufzuarbeitenden Katalysators (4, 6, 8),
b) eine Einrichtung (34) zur Aufbringung des fein gemahlenen katalytischen Materials auf ein Reduktionsmittel (20, 36) mit definiertem Korngrößenspektrum,
c) ein Chlorierungsreaktor (16) mit einer Wirbelschicht für das mit dem katalytischen Material versehene Reduktionsmittel (36),
d) eine Trenn- und Reinigungsstufe (22) zur Abtrennung von Staub (24) und zur fraktionierten Destillation des im Chlorierungsreaktor (16) entstandenen Gasgemisches, und
e) eine Verbrennungsstufe (28) für das aus dem Gasgemisch abgeschiedene Titantetrachlorid TiCl₄ vorgesehen sind.

## Claims

1. Process for recovering components of a catalyst (4, 6, 8), which contains, among others, titanium dioxide TiO₂ and one or more of the components tungsten oxide WO₃, molybdenum oxide MoO₃, vanadium pentoxide V₂O₅ and possibly operation-related contaminants such as, for example, arsenic, iron, cadmium and other heavy metals as well as compounds thereof, in which, in order,
a) the catalytic material of the catalyst (4, 6, 8) is ground to a fine powder,
b) the catalytic material which has been ground to the fine powder is deposited on a reducing agent (36) having a defined grain size spectrum and is compacted there,
c) the reducing agent (38) which has been modified in this way, and possibly a further reducing agent (20, 36), is chlorinated in a fluidised bed under reducing conditions,
d) titanium tetrachloride TiCl₄ is separated by distillation from other chlorine compounds and/or chlorine-oxygen compounds which are contained in the gas mixture produced during the chlorination, and
e) the titanium tetrachloride TiCl₄ obtained in this way is burned with oxygen or with oxygen and hydrogen.

2. Process according to claim 1, characterised in that the catalytic material which has been ground to a fine powder is deposited on the reducing agent (36), which has been moistened beforehand, and is calcined together with the reducing agent (36).

3. Process according to claim 1 or 2, characterised in that activated carbon and/or a low-ash coke having a mean particle diameter of approximately 0.1 to 0.5 mm, preferably 150 to 200 µm, is used as a reducing agent (20, 36).

4. Process according to one of the claims 1 to 3, characterised in that the chlorination is carried out in the fluidised-bed reactor (16) at a temperature of approximately 1000°C.

5. Process according to one of the claims 1 to 4, characterised in that the chlorine Cl₂ which is liberated during the burning of the titanium tetrachloride TiCl₄ with oxygen or with oxygen and water is used for the chlorination.

6. Process according to one of the claims 1 to 5, characterised in that titanium trichloride TiCl₃ is added during the reduction.

7. Device (32) for carrying out the process according to claim 3, characterised in that there are provided, in order,
a) a grinding device (12) for producing a fine powder from the catalytic material of the catalyst (4, 6, 8) to be processed,
b) a device (34) for depositing the finely ground catalytic material on a reducing agent (20, 36) having a defined grain size spectrum,
c) a chlorination reactor (16) having a fluidised bed for the reducing agent (36) which is provided with the catalytic material,
d) a separation and purification stage (22) for separating dust (24) and for fractionated distillation of the gas mixture produced in the chlorination reactor (16), and
e) a combustion stage (28) for the titanium tetrachloride TiCl₄ which has been separated out of the gas mixture.

## Revendications

1. Procédé de récupération des constituants d'un catalyseur (4,6,8) qui renferme, entres autres, du dioxyde de titane TiO₂ et un ou plusieurs des constituants que sont l'oxyde de tungstène WO₃, l'oxyde de molybzène Mo0₃, le pentoxyde de vanadium V₂0₅ et, le cas échéant, des impuretés dues à l'exploitation comme, par exemple, de l'arsenic, du fer, du cadmium et d'au-tres métaux lourds, ainsi que leurs composés, dans lequel successivement
a) on broye la matière catalytique du catalyseur (4,6,8) en une poudre fine,
b) on dépose la matière catalytique broyée en poudre fine sur un agent réducteur (36) de spectre granulométrique défini et on l'y consolide,
c) on chlore l'agent réducteur (38) ainsi modifié et, le cas échéant, de l'agent réducteur (20,36) en plus, dans des conditions réductrices dans un lit fluidisé,
d) on sépare par distillation du tétrachlorure de titane TiCl₄ d'autres composés chlorés et/ou de chlore et d'oxygène, qui sont contenus dans le mélange gazeux créé par la chloration, et
e) on brûle le tétrachlorure de titane TiCl₄ ainsi obtenu par de l'oxygène ou par de l'oxygène et de l'hydrogène.

2. Procédé suivant la revendication 1, caractérisé en ce que la matière catalytique broyée en poudre fine est déposée sur l'agent réducteur (36) préalablement humidifié et est calcinée en même que l'agent réducteur (33).

3. Procédé suivant la revendication 2, caractérisé en ce que l'on utilise comme agent réducteur (20,36) du charbon actif et/ou du coke pauvre en cendre, qui a un diamètre moyen des particules de 0,1 à 0,5 mm environ, de préférence de 150 à 200 µm.

4. Procédé suivant l'une des revendications 1 à 3, caractérisé en ce qu'il consiste à effectuer la chloration dans un réacteur (16) à lit fluidisé à une température de 1000°C environ.

5. Procédé suivant l'une des revendications 1 à 4, caractérisé en ce qu'il consiste, lors de la combustion du tétrachlorure de titane TiCl₄ par de l'oxygène ou par de l'oxygène et de l'hydrogène, à utiliser pour la chloration du chlore Cl₂ libre.

6. Procédé suivant l'une des revendications 1 à 5, caractérisé en ce qu'il consiste à ajouter, lors de la réduction, du trichlorure de titane TiCl₃.

7. Dispositif pour la mise en oeuvre du procédé suivant la revendication 3, caractérisé en ce qu'il comprend successivement :
a) un dispositif (12) de broyage pour produire une poudre fine en la matière catalytique du catalyseur (4,6,8) à traiter,
b) un dispositif (34) de dépôt de la matière catalytique broyée finement sur un agent réducteur (20,36) ayant un spectre granulométrique défini,
c) un réacteur (16) de chloration ayant un lit fluidisé pour l'agent réducteur (36) muni de la matière catalytique,
d) un étage (22) de séparation et d'épuration, destiné à la séparation de la poussière (24) et à la distillation fractionnée du mélange gazeux produit dans le réacteur (16) de chloration, et
e) un étage (28) de combustion du tétrachlorure de titane de TiCl₄ séparé du mélange gazeux.
